(19) Europäisches Patentamt
European Patent Office
Office européen des brevets

(11) **EP 3 238 348 B1**

(12) **FASCICULE DE BREVET EUROPEEN**

(45) Date de publication et mention de la délivrance du brevet:
**06.03.2019 Bulletin 2019/10**

(51) Int Cl.:
**H04B 1/7163** $^{(2011.01)}$    **G01S 13/76** $^{(2006.01)}$

(21) Numéro de dépôt: **15808678.5**

(86) Numéro de dépôt international:
**PCT/EP2015/079838**

(22) Date de dépôt: **15.12.2015**

(87) Numéro de publication internationale:
**WO 2016/102251 (30.06.2016 Gazette 2016/26)**

(54) **PROCEDE DE MESURE DE LA DISTANCE SEPARANT DEUX NOEUDS MOBILES AYANT ETABLI UNE LIAISON RADIOELECTRIQUE UWB**

VERFAHREN ZUR MESSUNG DES ABSTANDES ZWISCHEN ZWEI MOBILEN KNOTEN MIT EINER AUFGEBAUTEN UWB-FUNKVERBINDUNG

METHOD FOR MEASURING THE DISTANCE SEPARATING TWO MOBILE NODES HAVING ESTABLISHED A UWB RADIO LINK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014  FR 1463285**

(43) Date de publication de la demande:
**01.11.2017  Bulletin 2017/44**

(73) Titulaire: **Safran Electronics & Defense 92100 Boulogne-Billancourt (FR)**

(72) Inventeur: **CHIODINI, Alain 92100 Boulogne-Billancourt (FR)**

(74) Mandataire: **Prouvez, Julien et al Cabinet Boettcher 16, rue Médéric 75017 Paris (FR)**

(56) Documents cités:
**CN-A- 103 123 392       KR-A- 20120 038 353
US-A1- 2011 268 155**

**Description**

DOMAINE DE L'INVENTION

L'invention se rapporte au domaine de la géolocalisation et plus particulièrement à la géolocalisation par signaux de type Ultra Large Band (ou UWB pour « Ultra Wide Band »).

ARRIERE PLAN DE L'INVENTION

Il est connu, notamment du document US2011/268155, un procédé de géolocalisation par signaux UWB dans lequel une première unité UWB, présentée sous la forme d'une pastille autocollante de localisation, possède un émetteur UWB envoyant cycliquement un signal UWB à une deuxième unité UWB pourvue d'un récepteur UWB. Les unités UWB comprennent chacune une horloge interne donnant une référence de synchronisation commune.
La géolocalisation de la première unité UWB est effectuée par l'émission d'une signature UWB, généralement sous la forme d'une série de impulsions, à un instant de référence T0 connu de la deuxième unité. La deuxième unité mesure la durée qui sépare l'instant T0 de l'instant auquel la signature UWB est reçue. Cette durée correspond au temps de propagation du signal depuis la première unité UWB jusque la deuxième unité UWB. La vitesse du signal dans le milieu (généralement l'atmosphère) étant connue, la deuxième unité peut déterminer la distance la séparant de la première unité. La position de la première unité peut être déterminée en réalisant une pluralité de mesures depuis plusieurs autres unités dont la position est connue, à l'aide d'une méthode s'apparentant à la triangulation.
La précision de la mesure du temps de propagation du signal UWB conditionne la précision selon laquelle la distance séparant les unités est évaluée. Une bonne précision de mesure du temps de propagation requiert une parfaite synchronisation des horloges internes de chaque unité. Cette synchronisation peut se faire à l'aide d'un émetteur GPS lié à l'horloge interne et transmettant le signal de synchronisation GPS reçu par le réseau de satellites. Une autre solution consiste à implanter un dispositif de vérification et de recalage des horloges internes pouvant communiquer avec une unité de référence distribuant un signal de synchronisation des horloges. Ces dispositifs sont coûteux, nécessitent d'implanter des ressources spécifiques dans chaque unité UWB et requièrent de consacrer une part du temps de communication entre les unités à la synchronisation de leurs horloges internes. Ceci réduit alors la cadence selon laquelle les unités peuvent émettre leur signal UWB et résulte en une augmentation de l'incertitude de la position des unités à un instant donné.
Pour assurer une bonne précision, il importe également que les horloges internes réalisent un décompte du temps rigoureusement identique. Or, on constate des dérives dans le décompte du temps effectué par chaque horloge.
Ainsi, la précision d'une mesure de distance entre des unités à l'aide d'un signal UWB est tributaire de la synchronisation des horloges internes de chaque unité et de la dérive de ces mêmes horloges internes.

OBJET DE L'INVENTION

Un but de l'invention est d'augmenter la précision d'une mesure de distance par signal UWB.

RESUME DE L'INVENTION

A cet effet, on prévoit un procédé de mesure de distance entre une première unité et au moins une deuxième unité pourvues respectivement d'un premier et d'un deuxième émetteur/récepteur UWB disposant respectivement d'une première et d'une deuxième horloge interne. La communication entre les unités se fait en mode duplex par séparation temporelle selon un pluralité de trames comprenant chacune au moins un intervalle de temps descendant dédié à l'émission d'un premier signal UWB depuis la première unité vers la deuxième unité, et au moins un intervalle de temps montant dédié à la réception par la première unité d'un deuxième signal UWB émis par la deuxième unité. Les intervalles de temps sont cycliquement comptés par la première unité et la deuxième unité respectivement à partir d'une première et d'une deuxième référence temporelle. La première et la deuxième référence temporelle sont cycliquement données par la première et la deuxième horloge interne respectivement, le procédé selon l'invention comprend les étapes suivantes :

- émission par la première unité, dans l'intervalle de temps descendant, du premier signal UWB ;
- émission par la deuxième unité, dans l'intervalle de temps montant, d'un deuxième signal UWB comprenant un indicateur lié au temps écoulé entre la deuxième référence de synchronisation et la réception du premier signal UWB;
- détermination par la première unité de la distance la séparant de la deuxième unité.

Ainsi, la première unité dispose d'une information supplémentaire relative à la distance la séparant de la deuxième unité. La mesure de la distance met à profit ces deux informations et permet une amélioration de la précision de la mesure.

Selon un mode particulier de réalisation de l'invention, le procédé comprend l'étape supplémentaire de déterminer un écart temporel entre la première et la deuxième référence de synchronisation ainsi qu'une dérive d'horloge entre la première et la deuxième horloge interne, cette étape étant réalisée par la première unité.

Ainsi, la première unité peut réaliser une mesure de la distance séparant la première unité de la deuxième unité indépendante de la dérive d'horloge et/ou du décalage temporel entre les première et deuxième horloges internes.

L'invention concerne également une unité comprenant un émetteur/récepteur UWB disposant respectivement d'une première et d'une deuxième horloge interne et de moyens de traitement agencés pour mettre en oeuvre le procédé selon l'invention.

D'autres caractéristiques et avantages de l'invention ressortiront de la description qui suit des modes de réalisation particuliers non limitatifs de l'invention.

BREVE DESCRIPTION DES DESSINS

Il sera fait référence aux dessins annexés, parmi lesquelles :

- la figure 1 est une représentation schématique des unités de communication selon l'invention ;
- les figures 2 à 4 sont des représentations schématiques des signatures UWB des unités de communication de la figure 1;
- la figure 5 est une vue schématique du découpage temporel des communications entre les unités de communication de la figure 1 ;
- la figure 6 est une vue schématique des échanges entre les unités de communication de la figure 1 selon un premier mode de réalisation;
- la figure 7 est un logigramme représentant les étapes du mode de réalisation de la figure 6 ;
- la figure 8 est une représentation schématique de la signature UWB de la figure 3 dans laquelle est encodée une information ;

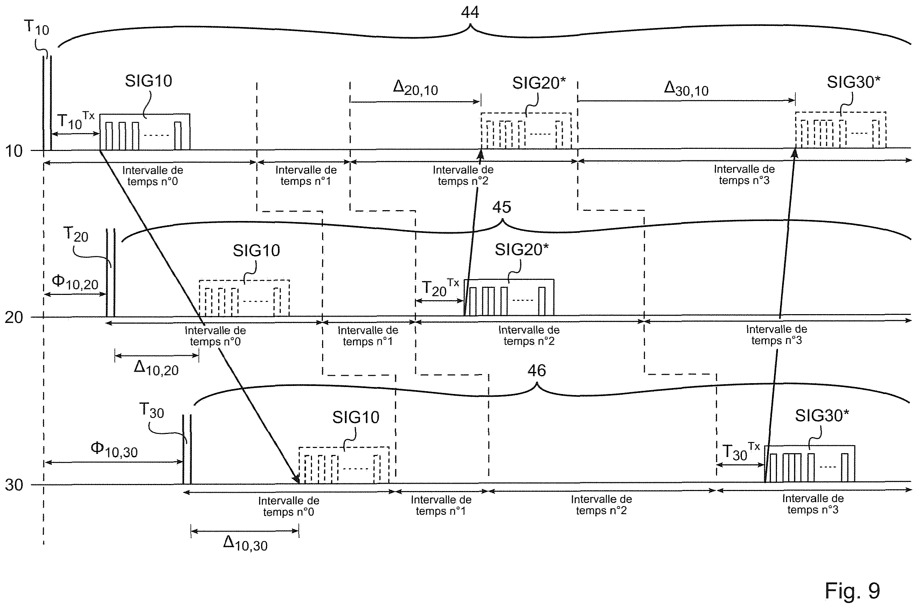

- la figure 9 est une vue schématique des échanges entre les unités de communication de la figure 1 se-lon un mode de réalisation particulier de l'invention.

DESCRIPTION DETAILLEE DE L'INVENTION

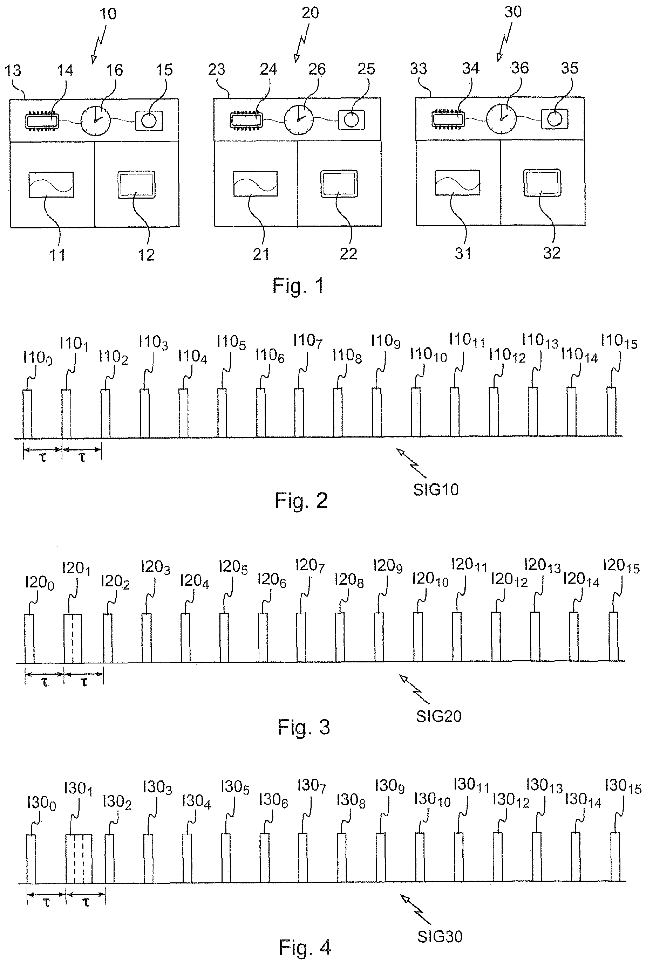

En référence à la figure 1, le procédé de mesure de distance selon l'invention est décrit en application à la mesure de distance entre une première unité 10 d'intérêt, une deuxième unité 20 voisine et une troisième unité 30 voisine.

La première unité 10 comprend un premier émetteur/récepteur à Ultra Large Bande (ou UWB pour « Ultra Wide Band ») 11 et un premier récepteur GPS 12 reliés à une première unité de traitement de données 13 comprenant un premier microcontrôleur 14, une première mémoire 15 et une première horloge interne 16.

La deuxième unité 20 comprend un deuxième émetteur/récepteur à Ultra Large Bande (ou UWB pour « Ultra Wide Band ») 21 et un deuxième récepteur GPS 22 reliés à une deuxième unité de traitement de données 23 comprenant un deuxième microcontrôleur 24, une deuxième mémoire 25 et une deuxième horloge interne 26.

La troisième unité 30 comprend un troisième émetteur/récepteur à Ultra Large Bande (ou UWB pour « Ultra Wide Band ») 31 et un deuxième récepteur GPS 32 reliés à une troisième unité de traitement de données 33 comprenant un troisième microcontrôleur 34, une troisième mémoire 35 et une troisième horloge interne 36.

Les émetteurs/récepteurs UWB 11, 21, 31 peuvent émettre et recevoir des signatures UWB SIG10, SIG20 et SIG30 respectivement caractéristiques des unités 10, 20 et 30. La signature UWB SIG10 est représentée en figure 2 et est constituée, ici, d'un train de seize impulsions monocycles UWB numérotées $I10_0$ à $I10_{15}$ d'une durée d'une nanoseconde émises consécutivement au début d'un intervalle de temps constant $\tau$ égal à 255 nanosecondes.

La signature UWB SIG20, représentée en figure 3, est constituée d'un train de seize impulsions monocycles UWB numérotées $I20_0$ à $I20_{15}$. Les impulsions $I20_0$ et $I20_2$ à $I20_{15}$ ont toutes une durée d'une nanoseconde. Comme visible en figure 3 la signature UWB SIG20 diffère de la signature UWB SIG10 en ce que la deuxième impulsion $I20_1$ est égale à deux nanosecondes. Ce mode de différenciation des signatures est connu sous le terme de modulation en largeur d'impulsions (Pulse Width Modulation : PWM).

La signature UWB SIG30 est constituée d'un train de seize impulsions monocycles UWB numérotées $I30_0$ à $I30_{15}$. Les impulsions $I30_0$ et $I30_2$ à $I30_{15}$ ont toutes une durée d'une nanoseconde. Comme visible en figure 4 la signature UWB SIG30 diffère de la signature UWB SIG10 en ce que la deuxième impulsion $I30_1$ est égale à trois nanosecondes.

Les unités 10, 20 et 30 sont autonomes en énergie et, par conséquent, mobiles.

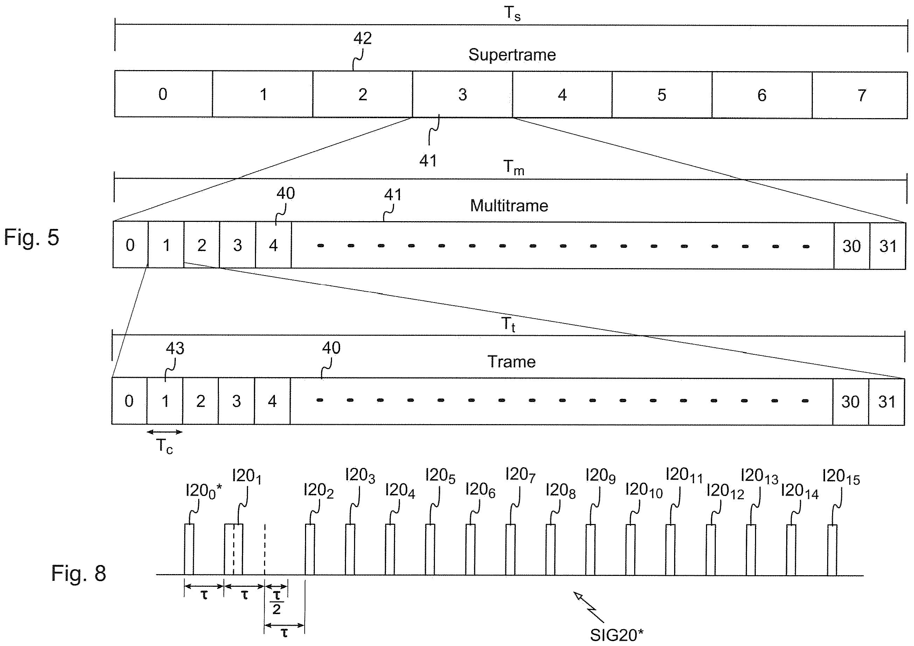

En référence à la figure 5, la communication entre les unités 10, 20 et 30 se fait selon un mode duplex par séparation temporelle sur une période de communication appelée trame 40 se répétant cycliquement et dont la durée

$T_t$ est fixe et connue de chaque unité, ici 524288 nanosecondes. Un ensemble de trente deux trames 40 numérotées de 0 à 31 constitue une multitrame 41 d'une durée $T_M$ de 16777216 nanosecondes. Un ensemble de huit multitrames 41 constitue une super trame 42 d'une durée $T_S$ de 134217728 nanosecondes. Chaque trame 40 est subdivisée en trente deux intervalles de temps 43 numérotés de 0 à 31, chacun d'une durée $T_c$ de 16384 nanosecondes.

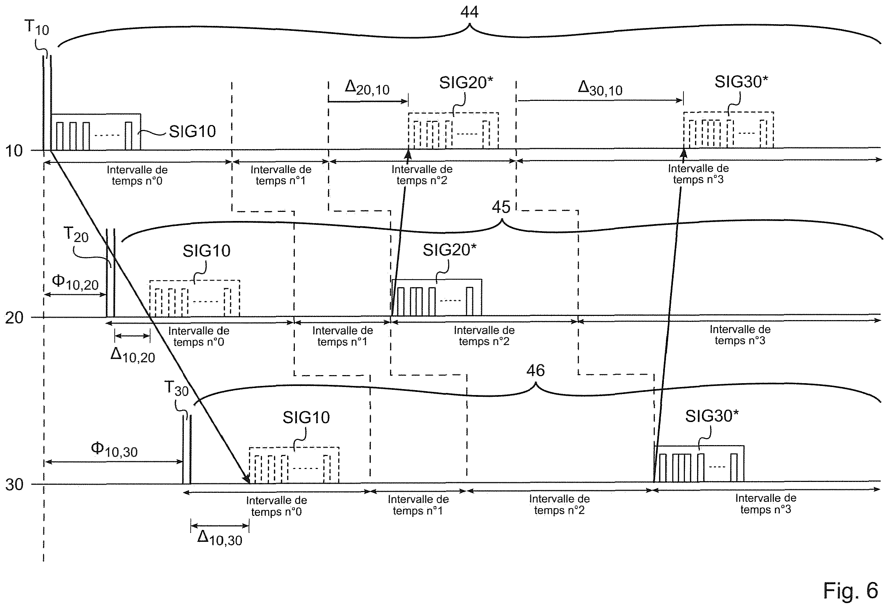

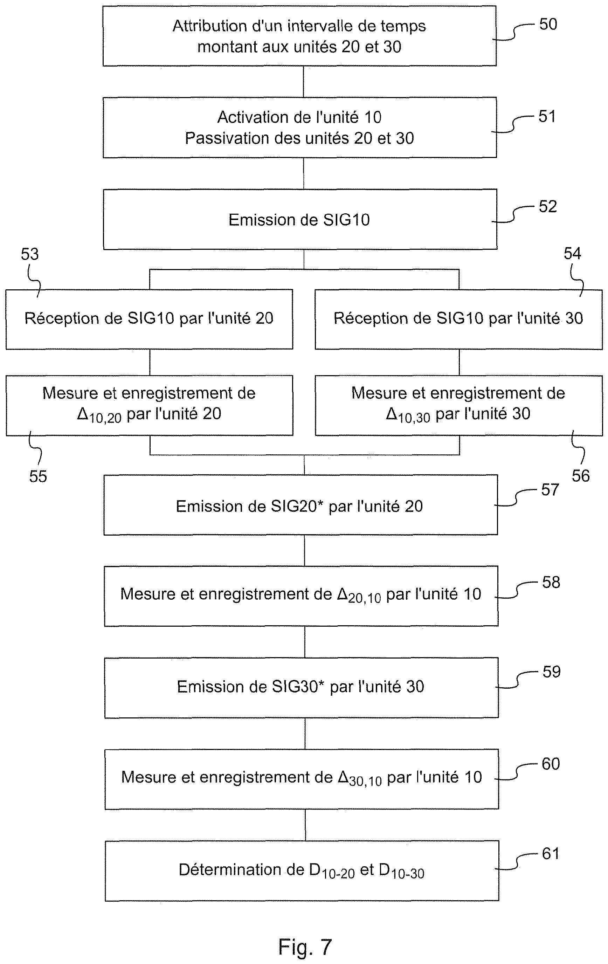

La communication entre les unités 10,20 et 30 et un premier mode de réalisation du procédé de mesure de distance de l'invention vont être décrits en référence aux figures 6 et 7. La figure 6 représente partiellement une trame 40 dont le numéro est k=1 issue d'une multitrame dont le numéro est j=3.

Les unités 10, 20 et 30 disposent respectivement d'une référence temporelle $T_{10}$, $T_{20}$, $T_{30}$ correspondant aux débuts respectifs des trames 44, 45 et 46. Chaque référence temporelle $T_{10}$, $T_{20}$, $T_{30}$ est respectivement donnée par les horloges internes 16, 26 et 36. Les horloges internes 16, 26 et 36 se calent régulièrement sur le signal 1PPS fourni respectivement par les récepteurs GPS 12, 22 et 32.

En principe, les références temporelles $T_{10}$, $T_{20}$, $T_{30}$ sont synchrones et permettent d'établir une communication sur un canevas temporel commun dans lequel les trames 44, 45 et 46 commencent toutes en même temps. En pratique, on constate l'existence d'un décalage temporel $\Phi_{10,20}$ entre les références temporelles $T_{10}$ et $T_{20}$, ainsi qu'un décalage temporel $\Phi_{10,30}$ entre les références temporelles $T_{10}$ et $T_{30}$. Les décalages temporels $\Phi_{10,20}$ et $\Phi_{10,30}$ subsistent, en l'absence de dérive d'horloge, entre les débuts de chacun des intervalles de temps des trames 44, 45 et 46. Les débuts des intervalles de temps sont représentés par des traits verticaux en pointillés sur la figure 6.

Le procédé va être décrit en référence à la détermination, par l'unité 10, des distances $D_{10-20}$ et $D_{10-30}$ la séparant respectivement des unités 20 et 30.

Selon une étape préalable 50, les unités 20 et 30 se sont vues attribuer respectivement l'intervalle de temps numéro 2 et numéro 3 comme intervalle de temps spécifique dédié à l'émission de leur signature UWB respective SIG20 et SIG30. Cet intervalle de temps est appelé intervalle montant.

Selon une première étape 51, l'unité 10 est considérée « active » et les unités 20 et 30 sont considérées « passives ».

Selon une deuxième étape 52, l'unité 10 émet sa signature UWB SIG10 sur le premier intervalle de temps 43 numéro 0 de la trame 44 numéro 1. L'unité 20 reçoit la signature UWB SIG10 après l'écoulement d'un temps de propagation $\Delta_{10,20}$ de la signature UWB SIG10 vers l'unité 20 décompté à partir de la référence temporelle $T_{20}$ (étape 53). L'unité 30 reçoit, quant à elle, la signature UWB SIG10 après l'écoulement d'un temps de propagation $\Delta_{10,30}$ de la signature UWB SIG10 vers l'unité 30 décompté à partir de la référence temporelle $T_{30}$ (étape 54). Les durées $\Delta_{10,20}$ et $\Delta_{10,30}$ sont mesurées et mémorisées respectivement par les unités de traitement 23 et 33 des unités 20 et 30 (étapes 55 et 56).

Selon une étape 57, une fois dans l'intervalle de temps numéro 2 de la trame numéro 45, l'unité 20 émet, à l'attention de l'unité 10, un signal SIG20* -représenté en figure 8- correspondant à la signature UWB SIG20 mais dans lequel a été encodée la valeur $\Delta_{10,20}$. Cette valeur est encodée par modulation en position des impulsions $I20_2$ à $I20_{15}$. Ici, la troisième impulsion $I20_2$ est retardée d'une valeur de $\tau/2$. La mise en place d'un retard de $\tau/2$ sur une ou plusieurs des impulsions comprises entre la deuxième et la quinzième impulsion d'une signature telle que les signatures UWB SIG10, SIG20 et SIG30 permet de réaliser un codage binaire sur 14 bits. Ce codage permet de transmettre 16384 valeurs différentes, soit une valeur de $\Delta_{10,20}$ ou $\Delta_{10,30}$ sous la forme d'un entier naturel compris entre 0 et 16383, correspondant à la valeur de $\Delta_{10,20}$ en nanosecondes. L'unité 10 mesure et mémorise le temps de propagation $\Delta_{20,10}$ du signal UWB SIG20* décompté à partir du début du deuxième intervalle de temps de la trame 44 (étape 58) et décode la valeur $\Delta_{10,20}$.

Selon une étape 59 similaire à l'étape 57, une fois dans l'intervalle de temps numéro 3 de la trame 46, l'unité 30 émet, à l'attention de l'unité 10, un signal. SIG30* correspondant à la signature UWB SIG30 mais dans lequel a été encodée la valeur $\Delta_{10,30}$. Cette valeur est encodée par modulation en position des impulsions $I30_2$ à $I30_{15}$. L'unité 10 mesure et mémorise le temps de propagation $\Delta_{30,10}$ du signal UWB SIG20* décompté à partir du début du troisième intervalle de temps de la trame 44 (étape 60) .

Selon une étape 61, l'unité 10 détermine alors les distances $D_{10-20}$ et $D_{10-30}$ la séparant respectivement des unités 20 et 30. Cette étape 60 peut prendre la forme du calcul de la moyenne arithmétique des temps de propagation ramenés aux débuts des intervalles de temps. On obtient alors le calcul suivant :

$$\frac{D_{10-20}}{v} = \frac{1}{2}\left(\Delta_{10,20} + \Delta_{20,10}\right)$$

$$\frac{D_{10-30}}{v} = \frac{1}{2}\left(\Delta_{10,30} + \Delta_{30,10}\right)$$

Où v est la vitesse de propagation du signal UWB dans le milieu considéré.

La précision de mesure est améliorée en ce qu'elle fait intervenir une mesure aller et une mesure retour entre les unités 10, 20 et 30 considérées comme ne se déplaçant pas d'une quantité significative sur la durée $T_t$ d'une trame 40.

Les mesures des distances $D_{20-10}$ et $D_{20-30}$ sont effectuées selon une méthode identique (répétition des étapes 51 à 61) pour la trame 40 dont le numéro est k=2. Dans cette trame numéro 2, c'est l'unité 20 considérée « active » et les unités 10 et 30 sont considérées « passives ». L'unité 20 envoie alors, au cours de l'intervalle de temps numéro 0 de la trame 45 numéro 2, sa signature UWB SIG20 vers les unités 10 et 30 qui mesurent et mémorisent respectivement $\Delta_{20,10}$ et $\Delta_{20,30}$. L'unité 10 envoie un signal UWB SIG10* dans l'intervalle de temps numéro 1 à l'attention de l'unité 20. Le signal UWB SIG10* comprend la valeur de $\Delta_{20,10}$. L'unité 30 envoie un signal UWB SIG30* dans l'intervalle de temps numéro 3 à l'attention de l'unité 20. Le signal UWB SIG30* comprend la valeur de $\Delta_{20,30}$. L'unité 20 peut alors déterminer les distances $D_{20-10}$ et $D_{20-30}$.

Un mode particulier de détermination des distances permettant de réduire l'effet du décalage temporel $\varphi_{10,20}$ va être maintenant détaillé en application à la mesure des distances $D_{10-20}$. Ce procédé peut être identiquement reproduit pour la mesure de la distance $D_{10-30}$.

Trois équations peuvent être établies pour la mesure de la distance $D_{10-20}$ exprimée sous la forme d'un temps de propagation, sur la base d'une hypothèse selon laquelle les temps de propagation des signaux UWB SIG10 et SIG20 sont égaux car les mouvements des unités 10 et 20 au cours d'une même trame 40 sont négligeables :

$$\frac{D_{20-10}}{v} + \Phi_{10,20} = \Delta_{20,10}$$

$$\frac{D_{10-20}}{v} = \Phi_{10,20} + \Delta_{10,20}$$

$$D_{10-20} = D_{20-10}$$

Dans la mesure où les valeurs $\Delta_{10,20}$ et $\Delta_{20,10}$ sont connues, ce système de trois équations à trois inconnues ($D_{10-20}$, $D_{20-10}$ et $\Phi_{10,20)}$ permet d'effectuer une détermination de l'écart temporel $\Phi_{10,20}$et d'obtenir ainsi une valeur de la distance séparant les unités 10 et 20 indépendante de l'écart temporel $\Phi_{10,20}$.

Le système d'équations suivant s'applique alors à la détermination de la distance séparant les unités 10 et 30 :

$$\frac{D_{30-10}}{v} + \Phi_{10,30} = \Delta_{30,10}$$

$$\frac{D_{10-30}}{v} = \Phi_{10,30} + \Delta_{10,30}$$

$$D_{10-30} = D_{30-10}$$

Ainsi, dans le cadre d'un système comprenant un nombre d'unités n numérotées de 0 à N actives à tour de rôle lorsque le numéro de trame k est égal à n, on obtiendra le système suivant :

$$\frac{D_{n-k}}{v} + \Phi_{k,n} = \Delta_{n,k}$$

$$\frac{D_{k-n}}{v} = \Phi_{k,n} + \Delta_{k,n}$$
$$D_{k-n} = D_{n-k}$$

Avec :

- n : numéro de l'unité active, à partir de laquelle on mesure les distances la séparant des autres unités ;
- k : numéro de l'unité dont on cherche à déterminer la distance la séparant de l'unité n ;
- v : vitesse de propagation du signal UWB dans le milieu considéré.

Un autre mode de réalisation permet également de s'affranchir de l'effet de la dérive entre les horloges internes sur la mesure des distances entre unités.

En se plaçant dans la trame numéro k d'une multi trame numéro j, le système d'équations précédent devient :

$$\frac{D_{n-k}^{j}}{v} + \Phi_{k,n}^{j} + \frac{d\Phi_{k,n}^{j}}{dt}(n+1)T_c = \Delta_{n,k}^{j}$$

$$\frac{D_{k-n}^{j}}{v} = \Phi_{k,n}^{j} + \left(1 + \frac{d\Phi_{k,n}^{j}}{dt}\right)\Delta_{k,n}^{j}$$

$$D_{k-n}^{j} = D_{n-k}^{j}$$

Avec :

- n : numéro de l'unité active, à partir de laquelle on mesure les distances la séparant des autres unités ;
- k : numéro de l'unité dont on cherche à déterminer la distance la séparant de l'unité n ;
- v : vitesse de propagation du signal UWB dans le milieu considéré ;
- $d\Phi_{k,n}$ /dt : dérive de l'horloge de l'unité n par rapport à l'horloge de l'unité k.

Ce même système devient, dans la trame numéro k de la multi trame suivante numéro j+1 :

$$\frac{D_{n-k}^{j+1}}{v} + \Phi_{k,n}^{j+1} + \frac{d\Phi_{k,n}^{j+1}}{dt}(n+1)T_c = \Delta_{n,k}^{j+1}$$

$$\frac{D_{k-n}^{j+1}}{v} = \Phi_{k,n}^{j+1} + \left(1 + \frac{d\Phi_{k,n}^{j+1}}{dt}\right)\Delta_{k,n}^{j+1}$$

$$D_{k-n}^{j+1} = D_{n-k}^{j+1}$$

$$\Phi_{k,n}^{j+1} = \Phi_{k,n}^{j} + \frac{d\Phi_{k,n}^{j}}{dt}T_M = \Phi_{k,n}^{j} + \frac{d\Phi_{k,n}^{j+1}}{dt}T_M$$

Nous supposons que la dérive d'horloge est constante au cours du temps.

En considérant les vitesses de déplacement des unités (par exemple cinq mètres par seconde pour une allure de course humaine normale) en regard de la durée d'une multitrame (environ dix sept millisecondes), il est possible de faire l'hypothèse suivante :

$$D_{k-n}^{j} = D_{k-n}^{j+1}$$

$$D_{n-k}^{j} = D_{n-k}^{j+1}$$

La dérive d'horloge sera considérée comme pouvant s'exprimer sous la forme d'une fonction du premier de gré, et on obtient alors l'égalité suivante :

$$\frac{d\Phi_{k,n}^{j+1}}{dt} = \frac{d\Phi_{k,n}^{j}}{dt}$$

Ce système de neuf équations à huit inconnues peut alors être résolu par substitution et permet d'effectuer une étape de détermination de l'écart temporel $\Phi_{k,n}^{j}$ et de la dérive d'horloge $d\Phi_{k,n}^{j}/dt$. Ceci permet d'obtenir une mesure des distances séparant une unité n d'une unité k indépendamment de l'écart temporel pouvant exister entre leurs deux horloges internes ainsi que de la dérive d'horloge de chacune de ces unités.

Selon un mode de réalisation particulier représenté en figure 7, les unités 10, 20 et 30 émettent leurs signatures UWB respectives SIG10, SIG20 et SIG30 avec respectivement un premier retard à l'émission $T_{10}^{Tx}$, un deuxième retard à l'émission $T_{20}^{Tx}$ et un troisième retard à l'émission $T_{30}^{Tx}$. L'étape préalable 50 comprend alors une étape préalable supplémentaire au cours de laquelle chaque unité 10, 20, 30 reçoit la valeur de son retard à l'émission $T_{10}^{Tx}$, $T_{20}^{Tx}$ et $T_{30}^{Tx}$. Ces retards à l'émission permettent d'éviter des superpositions d'émissions de signature UWB en cas de décalage temporel important entre les horloges internes 16, 26 et 36. La détermination des distances séparant les unités se fait selon la même méthode que celle précédemment exposée, les décalages temporels n'introduisant aucune inconnue supplémentaire dans le système d'équations à résoudre.

Bien entendu, l'invention n'est pas limitée aux modes de réalisation décrits mais englobe toute variante entrant dans le champ de l'invention telle que définie par les revendications.

En particulier :

- bien qu'ici la mesure de distance soit effectuée entre trois unités, l'invention s'applique également à un nombre différents d'unités comme par exemple deux ou plus que trois ;
- bien qu'ici l'unité de traitement comprenne un microcontrôleur, une mémoire et une horloge interne, l'invention s'applique également à d'autres moyens de traitement comme par exemple un microprocesseur ou un automate ;
- bien qu'ici, les signatures UWB comprennent seize impulsions d'une durée nominale d'une nanoseconde, l'invention s'applique également à d'autres types de signatures comme par exemple des signatures comprenant un nombre différent de impulsions, ou des impulsions de plus d'une nanoseconde, ou de moins d'une nanoseconde, les impulsions pouvant être séparées d'un intervalle de temps constant ou variable qui peut être supérieur ou inférieur à 255 nanosecondes ;
- bien qu'ici les signatures UWB soient distinguées par modulation de la durée de leur seconde impulsion, l'invention s'applique également à d'autres modes de différenciation des signatures comme par exemple une modulation de durée d'une autre impulsion;
- bien qu'ici la différenciation des signatures se fasse au moyen de la modulation en largeur d'impulsions (PWM), l'invention s'applique également à d'autres modes de différenciation des signatures comme par exemple une modulation en position d'impulsions ou une modulation à deux états de phase. Dans le cadre d'une différenciation par modulation en position d'impulsions, il sera alors nécessaires de réaliser l'encodage de l'indicateur lié au temps de propagation sur des impulsions distinctes de celles utilisées pour la différenciation de des signatures;
- -bien qu'ici le procédé mette en oeuvre des signatures comprenant des impulsions monocycles, l'invention s'applique également à d'autres types d'impulsions comme par exemple des impulsions monocycles gaussiennes ou non, leurs dérivées, des impulsions de Rayleigh, des impulsions d'Hermite, des impulsions en monocycle Gaussien modulé ;
- bien qu'ici le procédé soit décrit en relation avec la mesure de la distance séparant l'unité d'intérêt 10 des unités voisines 20 et 30, l'invention s'applique également à la mesure, dans une trame ultérieure k=2, de la distance séparant l'unité 20 (qui devient alors l'unité d'intérêt) des unités 10 et 30 (qui deviennent les unités voisines). D'une manière générale, à chaque trame de la multitrame correspondra l'activation (c'est-à-dire le passage au statut d'unité d'intérêt) d'une unité du groupe d'unités à partir de laquelle seront mesurées les distances la séparant des autres unités ;
- bien qu'ici l'encodage des temps de propagation des signatures soit réalisé par modulation en position des impulsions des signatures mettant en oeuvre un retard de $\tau/2$, l'invention s'applique également à d'autres modes d'encodage comme par exemple une modulation en position mettant en oeuvre une avance ou un retard supérieur ou inférieur à $\tau/2$;
- bien qu'ici le signal émis par les unités voisines comprenne un encodage du temps de propagation du signal émis par l'unité d'intérêt, l'invention s'applique également à d'autres types d'indicateurs liés au temps écoulé entre la référence de synchronisation de l'unité voisine et la réception du signal UWB émis par l'unité d'intérêt, comme par exemple un encodage de la distance, calculée par l'unité voisine, séparant l'unité d'intérêt de l'unité voisine ;
- bien qu'ici les systèmes d'équations soient résolus par substitution, l'invention s'applique également à d'autres méthodes de résolution d'équations comme par exemple la méthode d'élimination ou de combinaison.

**Revendications**

**1.** Procédé de mesure de distance entre une première unité (10) et au moins une deuxième unité (20) pourvues respectivement d'un premier et d'un deuxième émetteur/récepteur UWB (11, 21) disposant respectivement d'une première et d'une deuxième horloge interne (16, 26), la communication entre les unités (10, 20) se faisant en mode duplex par séparation temporelle selon une pluralité de trames (40, 44, 45, 46) comprenant chacune au moins un intervalle de temps (43) descendant dédié à l'émission d'un premier signal UWB (SIG10, SIG20, SIG30) depuis la première unité (10) vers la deuxième unité (20), et au moins un intervalle de temps (43) montant dédié à la réception par la première unité (10) d'un deuxième signal UWB (SIG20*, SIG30*) émis par la deuxième unité (20, 30), les intervalles de temps (43) étant cycliquement comptés par la première unité (10) et la deuxième unité (20,30) respectivement à partir d'une première et d'une deuxième référence temporelle (T10, T20, T30), la première et la deuxième référence temporelle (T10, T20, T30) étant cycliquement données par la première et la deuxième horloge interne (16, 26, 36) respectivement, le procédé comprenant les étapes suivantes :

- émission par la première unité (10), dans l'intervalle de temps descendant, du premier signal UWB (SIG10) ;
- émission par la deuxième unité (20, 30), dans l'intervalle de temps montant, d'un deuxième signal UWB (SIG20*, SIG30*) comprenant un indicateur lié au temps écoulé entre la deuxième référence temporelle (T20, T30) et la réception du premier signal UWB (SIG10);
- détermination par la première unité (10) de la distance ($D_{10-20}$) la séparant de la deuxième unité (20).

**2.** Procédé selon la revendication 1, dans lequel, le deuxième signal UWB (SIG20*, SIG30*) comprenant au moins deux impulsions ($I20_0$, $I20_1$, $I30_0$, $I30_1$) l'indicateur temporel est encodé dans le deuxième signal UWB (SIG20*, SIG30*) par modulation en position de impulsion (PPM).

**3.** Procédé selon la revendication 1, comprenant l'étape supplémentaire de déterminer un écart temporel ($\Phi_{10,20}$ $\Phi_{k.n}^{j}$) entre la première et la deuxième référence de synchronisation (T10, T20) et/ou une dérive d'horloge ($d\Phi_{k.n}^{j}$/dt) entre la première et la deuxième horloge interne (16, 26), cette étape étant réalisée par la première unité (10).

**4.** Procédé de mesure selon l'une quelconque des revendications précédentes, dans lequel la première unité (10) et la deuxième unité (20) émettent le premier et le deuxième signal UWB (SIG10, SIG20, SIG30) avec respectivement un premier retard à l'émission ($T_{10}^{Tx}$) et un deuxième retard à l'émission, ($T_{20}^{Tx}$, $T_{30}^{Tx}$).

**5.** Procédé de mesure selon l'une quelconque des revendications précédentes, dans lequel l'intervalle de temps descendant est le premier intervalle de temps de la trame (40).

**6.** Procédé selon l'une quelconque des revendications précédentes, dans lequel, la première unité (10) réalisant une mesure de distance par rapport à plusieurs unités voisines (20, 30), le procédé comprend l'étape préalable (50) d'attribuer à chaque unité voisine (20, 30) un intervalle de temps montant spécifique de la trame (40) pour l'émission de leur signal UWB (SIG20, SIG30, SIG20*, SIG30*) respectif.

**7.** Dispositif de géolocalisation comprenant une première unité (10) et au moins une deuxième unité (20, 30) pourvues respectivement d'un premier et d'un deuxième émetteur/récepteur UWB (11, 21, 31) disposant respectivement d'une première et d'une deuxième horloge interne (16, 26, 36),la première unité comprenant également des premiers moyens de traitement (13) et la deuxième unité (20, 30) comprenant également des deuxièmes moyens de traitement (23, 33), les premiers et deuxièmes moyens de traitement (13, 23, 33) étant agencés pour mettre en oeuvre le procédé selon l'une quelconque des revendications précédentes.

**Patentansprüche**

**1.** Verfahren zum Messen des Abstandes zwischen einer ersten Einheit (10) und mindestens einer zweiten Einheit (20), die mit einem ersten bzw. einem zweiten UWB-Sender/Empfänger (11, 21) versehen sind, die über eine erste bzw. eine zweite interne Uhr (16, 26) verfügen, wobei die Kommunikation zwischen den Einheiten (10, 20) im Zeitduplexmodus mit einer Vielzahl von Rahmen (40, 44, 45, 46) erfolgt, die jeweils mindestens ein fallendes Zeitintervall (43) umfassen, das zum Senden eines ersten UWB-Signals (SIG10, SIG20, SIG30) von der ersten Einheit (10) in Richtung der zweiten Einheit (20) bestimmt ist, sowie mindestens ein steigendes Zeitintervall (43), das zum Empfangen eines von der zweiten Einheit (20, 30) ausgesandten zweiten UWB-Signals (SIG20*, SIG30*) durch die erste Einheit (10) bestimmt ist, wobei die Zeitintervalle (43) von der ersten Einheit (10) und der zweiten Einheit (20, 30) ab einer ersten bzw. einer zweiten Zeitreferenz (T10, T20, T30) zyklisch gezählt werden, wobei die erste und die zweite Zeitreferenz (T10, T20, T30) von der ersten bzw. der zweiten internen Uhr (16, 26, 36) zyklisch angezeigt werden, wobei das Verfahren die folgenden Schritte umfasst:

- Senden des ersten UWB-Signals (SIG10) mittels der ersten Einheit (10) in dem fallenden Zeitintervall;
- Senden eines zweiten UWB-Signals (SIG20*, SIG30*), das einen Indikator umfasst, der mit der Zeit verknüpft ist, die zwischen der zweiten Zeitreferenz (T20, T30) und dem Empfangen des ersten UWB-Signals (SIG10) vergeht, mittels der zweiten Einheit (20, 30) in dem steigenden Zeitintervall,
- Bestimmen mittels der ersten Einheit (10) des Abstandes ($D_{10\text{-}20}$), der diese von der zweiten Einheit (20) trennt.

2. Verfahren nach Anspruch 1, bei dem unter Berücksichtigung, dass das zweite UWB-Signal (SIG20*, SIG30*) mindestens zwei Impulse ($I20_0$, $I20_1$, $I30_0$, $I30_1$) umfasst, der Zeitindikator in dem zweiten UWB-Signal (SIG20*, SIG30*) durch Pulsphasenmodulation (PPM) codiert wird.

3. Verfahren nach Anspruch 1, umfassend den zusätzlichen Schritt des Bestimmens eines zeitlichen Abstandes ($\Phi_{10,20}$ $\Phi_{k,n}^{j}$) zwischen der ersten und der zweiten Synchronisationsreferenz (T10, T20) und/oder einer Uhrdrift ( $d\Phi_{k,n}^{j}$ /dt) zwischen der ersten und der zweiten internen Uhr (16, 26), wobei dieser Schritt von der ersten Einheit (10) durchgeführt wird.

4. Verfahren zum Messen nach einem der vorhergehenden Ansprüche, bei dem die erste Einheit (10) und die zweite Einheit (20) das erste und das zweite UWB-Signal (SIG10, SIG20, SIG30) mit einer ersten Sendeverzögerung ($T_{10}^{Tx}$) bzw. einer zweiten Sendeverzögerung ($T_{20}^{Tx}$, $T_{30}^{Tx}$) aussenden.

5. Verfahren zum Messen nach einem der vorhergehenden Ansprüche, bei dem das fallende Zeitintervall das erste Zeitintervall des Rahmens (40) ist.

6. Verfahren nach einem der vorhergehenden Ansprüche, bei dem unter Berücksichtigung, dass die erste Einheit (10) eine Distanzmessung in Bezug auf mehrere benachbarte Einheiten (20, 30) durchführt, das Verfahren den vorausgehenden Schritt (50) des Zuordnens eines spezifischen steigenden Zeitintervalls des Rahmens (40) für das Senden ihres jeweiligen UWB-Signals (SIG20, SIG30, SIG20*, SIG30*) zu jeder benachbarten Einheit (20, 30) umfasst.

7. Vorrichtung zur Geolokalisierung, umfassend eine erste Einheit (10) und mindestens eine zweite Einheit (20, 30), die mit einem ersten bzw. einem zweiten UWB-Sender/Empfänger (11, 21, 31) versehen sind, die über eine erste bzw. eine zweite interne Uhr (16, 26, 36) verfügen, wobei die erste Einheit ferner erste Verarbeitungsmittel (13) und die zweite Einheit (20, 30) ferner zweite Verarbeitungsmittel (23, 33) umfasst, wobei die ersten und die zweiten Verarbeitungsmittel (13, 23, 33) so ausgebildet sind, dass sie das Verfahren nach einem der vorhergehenden Ansprüche durchführen.

## Claims

1. A method of measuring distance between a first unit (10) and at least one second unit (20), the units being respectively provided with first and second UWB transceivers (11, 21) having respective first and second internal clocks (16, 26), with communication between the units (10, 20) taking place in duplex mode by time division over a plurality of frames (40, 44, 45, 46), each having at least one downlink time slot (43) dedicated to transmitting a first UWB signal (SIG10, SIG20, SIG30) from the first unit (10) to the second unit (20), and at least one uplink time slot (43) dedicated to the first unit (10) receiving a second UWB signal (SIG20*, SIG30*) transmitted by the second unit (20, 30), the time slots (43) being counted cyclically by the first unit (10) and by the second unit (20, 30) from respective first and second time references (T10, T20, T30), the first and second time references (T10, T20, T30) being given cyclically by the first and second internal clocks (16, 26, 36) respectively, the method comprising the following steps:

- the first unit (10) transmitting the first UWB signal (SIG10) during the downlink time slot;
- the second unit (20, 30) transmitting a second UWB signal (SIG20*, SIG30*) during the uplink time slot, which signal includes an indication associated with the time that elapsed between the second time reference (T20, T30) and reception of the first UWB signal (SIG10); and
- the first unit (10) determining the distance ($D_{10\text{-}20}$) between itself and the second unit (20).

2.  A method according to claim 1, wherein the second UWB signal (SIG20*, SIG30*) comprises at least two pulses ($I20_0$, $I20_1$, $I30_0$, $I30_1$) and the time indication is encoded in the second UWB signal (SIG20*, SIG30*) by pulse position modulation (PPM).

3.  A method according to claim 1, including an additional step of determining a time offset ($\Phi_{10,20}$ $\Phi_{k,n}^{j}$) between the first and second synchronization references (T10, T20) and/or a clock drift ($d\Phi_{k,n}^{j}$ /dt) between the first and second internal clocks (16, 26), this step being performed by the first unit (10).

4.  A measurement method according to any preceding claim, wherein the first measurement unit (10) and the second measurement unit (20) transmit the first and second UWB signals (SIG10, SIG20, SIG30) respectively with a first transmission delay ($T_{10}^{Tx}$) and a second transmission delay ($T_{20}^{Tx}$, $T_{30}^{Tx}$).

5.  A measurement method according to any preceding claim, wherein the downlink time slot is the first time slot of the frame (40).

6.  A method according to any preceding claim, wherein the first unit (10) measures distances relative to a plurality of neighboring units (20, 30), and the method includes a prior step (50) of giving each neighboring unit (20,30) a specific uplink time slot in the frame (40) for transmitting its respective UWB signal (SIG20, SIG30, SIG20*, SIG30*).

7.  Geolocation device including a first unit (10) and at least a second unit (20, 30) having respective first and second UWB transceiver (11, 21, 31) having respective first and second internal clocks (16, 26, 36), the first unit also including first processor means (13) and the second unit (20, 30) comprising also second processor means (23, 33), the first and second processor means (13, 23, 33) being arranged to perform the method according to any preceding claim.

Fig. 1

Fig. 2

$110_0$ $110_1$ $110_2$ $110_3$ $110_4$ $110_5$ $110_6$ $110_7$ $110_8$ $110_9$ $110_{10}$ $110_{11}$ $110_{12}$ $110_{13}$ $110_{14}$ $110_{15}$

$\tau$ $\tau$

SIG10

Fig. 3

$120_0$ $120_1$ $120_2$ $120_3$ $120_4$ $120_5$ $120_6$ $120_7$ $120_8$ $120_9$ $120_{10}$ $120_{11}$ $120_{12}$ $120_{13}$ $120_{14}$ $120_{15}$

$\tau$ $\tau$

SIG20

Fig. 4

$130_0$ $130_1$ $130_2$ $130_3$ $130_4$ $130_5$ $130_6$ $130_7$ $130_8$ $130_9$ $130_{10}$ $130_{11}$ $130_{12}$ $130_{13}$ $130_{14}$ $130_{15}$

$\tau$ $\tau$

SIG30

EP 3 238 348 B1

$T_s$

42

Supertrame

| 0 | 1 | 2 | 3 | 4 | 5 | 6 | 7 |

41

$T_m$

40    41    Multitrame

| 0 | 1 | 2 | 3 | 4 | - - - - - - - - - - - - - - - - - - - - | 30 | 31 |

Fig. 5

$T_t$

43    40    Trame

| 0 | 1 | 2 | 3 | 4 | - - - - - - - - - - - - - - - - - - - - | 30 | 31 |

$T_c$

Fig. 8

I20$_0$*  I20$_1$  I20$_2$  I20$_3$  I20$_4$  I20$_5$  I20$_6$  I20$_7$  I20$_8$  I20$_9$  I20$_{10}$  I20$_{11}$  I20$_{12}$  I20$_{13}$  I20$_{14}$  I20$_{15}$

$\tau$   $\tau$   $\frac{\tau}{2}$   $\tau$

SIG20*

Fig. 6

Fig. 7

Fig. 9

**EP 3 238 348 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

*   US 2011268155 A